# EUROPEAN PATENT APPLICATION

(11) **EP 3 157 185 A1**
(43) Date of publication of application: **19.04.2017**
(21) Application number: 16193661.2
(22) Date of filing: 13.10.2016
(51) Int. Cl.: H04L 1/00

(54) **ELECTRONIC DEVICE AND DATA VERIFICATION METHOD**

(30) Priority: 14.10.2015 JP 2015202645
(71) Applicant: FUJITSU LIMITED, Kawasaki-shi Kanagawa 211-8588 (JP)
(72) Inventor: Yamamoto, Dai, Kanagawa, 211-8588 (JP); Morikawa, Ikuya, Kanagawa, 211-8588 (JP)
(74) Representative: Hoffmann Eitle

(57) **Abstract**

The electronic device has a falsification detection bit string generation circuit, a transmission data generation circuit, and a data output circuit. The falsification detection bit string generation circuit generates a transmission falsification detection bit string having a bit array in which at least one "0" to "1" are changed depending on changing at least one "1" of a transmission bit string to "0". The transmission data generation circuit generates transmission data including a transmission bit string and a transmission falsification detection bit string and the data output circuit transmits the transmission data in the open drain output mode.

## Description

### FIELD

The present invention relates to an electronic device and a data verification method.

### BACKGROUND

In recent years, a forged product (hereinafter, also referred to as a clone) of printer cartridges, batteries, and gaming machine cartridges, etc., are currently being sold. For example, clones of batteries may have insufficient quality, and therefore if the clones having insufficient quality are used, there may be problems as a result of using such clones. It is preferable to authenticate that a battery is not a clone, when the battery is used, in order to prevent a clone from being used.

As an example where a battery is authenticated, an authentication device mounted on a control device of an automobile, an aircraft, etc., communicates with a device to be authenticated mounted on a battery mounted in an automobile, an aircraft, etc., and authenticates that the battery is not a clone. The authentication device transmits a "challenge" signal to the device on the battery. The device on the battery receives the "challenge" signal, and transmits a "response" signal in accordance with a secret key, to the authentication device. The authentication device receives the "response" signal, and determines whether the device on the battery is not a clone, by comparing the transmitted "challenge" signal and the received "response" signal. The secret key stored in the device on the battery is not easy to decrypt from the outside, and therefore it is authenticated by performing authentication processing by which the product in which the device is mounted is authenticated by using a secret key.

For the communication between an authentication device and a device to be authenticated, a serial communication bus system is employed. The serial communication bus system includes an I-squared-C (Inter-Integrated Circuit: I2C) bus, a serial peripheral interface (SPI), I-wire (registered trademark), UART, etc. The number of input/output circuits of an IC chip is reduced than that when a parallel communication bus system is employed, and therefore the manufacturing cost of the IC chip may be reduced, by employing the serial communication bus system for the communication between an authentication device and a device to be authenticated.

The serial communication bus system is also employed for various kinds of data transfer processing, not only for authentication processing. Further, the serial communication bus system is widely employed in a sensor node, an IoT device such as a wearable device, an incorporated system employed in a home appliance, an automobile, an aircraft, etc., and various devices, such as a cellular phone, a smartphone, and a smart card.

For the serial communication bus system, such as an I2C bus, a technique is known that detects falsification by verifying the consistency between transmission data transmitted by a transmitter and reception data received by a receiver by an error detection technique and an encryption technique (e.g., see Patent Document 1).

### Related Documents

[Patent Document 1] Japanese Laid Open Patent Document No. 2015-62286
[Non Patent Document 1] "UM10204 I²C-bus specification and user manual Rev. 5. 0J - October 9, 2012 (Japanese translation on November 2", 2012.

### SUMMARY

However, it is not easy to achieve high tolerance to falsification, when a detection of falsification is performed by using an error detection technique.

In one embodiment, it is an object to provide an electronic device which may perform a data verification process having a high tolerance to falsification.

In an aspect, the electronic device has a falsification detection bit string generation circuit, a transmission data generation circuit, and a data output circuit. The falsification detection bit string generation circuit generates a transmission falsification detection bit string having a bit array where at least one "0" is changed to "1" when at least one "1" of a transmission bit string is changed to "0". The transmission data generation circuit generates transmission data including a transmission bit string and a transmission falsification detection bit string and the data output circuit transmits the transmission data in the open drain output mode.

In one embodiment, an electronic device which performs data verification process having high tolerance to falsification is provided.

### BRIEF DESCRIPTION OF DRAWINGS

FIG. 1A is a circuit block diagram illustrating an example of a communication system including a circuit that transmits and receives data via an I2C bus;
FIG. 1B is a diagram illustrating an example of a data format that is used in the communication system illustrated in FIG. 1A;
FIG. 1C is a diagram illustrating another example of a data format that is used in the communication system illustrated in FIG. 1A;
FIG. 2A is a diagram illustrating a sequence of an example of the challenge and response authentication using the common key encryption scheme;
FIG. 2B is a diagram illustrating a sequence of another example of the challenge and response authentication using the common key encryption scheme;
FIG. 3A is a diagrams illustrating the case where no problem occurs, when the challenge and response authentication is performed by using the I2C bus;
FIG. 3B is a diagrams illustrating the case where a problem occurs, when the challenge and response authentication is performed by using the I2C bus;
FIG. 4A is a diagram illustrating an example of transmission data including a transmission bit string and a checksum;
FIG. 4B is a diagram illustrating an example of transmission data including a transmission bit string and a checksum including errors;
FIG. 4C is a diagram illustrating an example of transmission data including a falsified transmission bit string and a falsified checksum;
FIG. 5 is a diagram illustrating a comparison between the checksum and CRC error detection technique and the technique that uses a hash function;
FIG. 6 is a block diagram of a data verification system according to a first embodiment;
FIG. 7A is a diagram illustrating a sequence of data verification processing in the data verification system illustrated in FIG. 6;
FIG. 7B is a diagram illustrating a flowchart of detailed processing at S105 illustrated in FIG. 7A;
FIG. 8 is a diagram illustrating transmission data generated by the transmission data generation circuit illustrated in FIG. 6;
FIG. 9 is a block diagram of a data verification system according to a second embodiment;
FIG. 10A is a diagram illustrating a sequence of data verification processing in the data verification system illustrated in FIG. 9;
FIG. 10B is a diagram illustrating a flowchart of detailed processing at S305 illustrated in FIG. 10A;
FIG. 11 is a diagram illustrating transmission data generated by the transmission data generation circuit illustrated in FIG. 9;
FIG. 12 is a diagram illustrating a comparison between techniques used when a digest is generated;
FIG. 13 is a block diagram of a data verification system according to a third embodiment;
FIG. 14 is a diagram illustrating a sequence of data verification processing in the data verification system illustrated in FIG. 13;
FIG. 15 is a diagram illustrating a flowchart of detailed processing at S507 illustrated in FIG. 14;
FIG. 16 is a block diagram of a data verification system not having a falsification detection function according to the third embodiment; and
FIG. 17 is a block diagram of the data verification system illustrated in FIG. 13.

### DESCRIPTION OF EMBODIMENTS

Hereinafter, with reference to the drawings, an electronic device and a data verification method according to the present invention are explained. However, the technical scope of the present invention is not limited to these embodiments.

### (Outline of electronic device according to embodiment)

The electronic device according to the embodiment transmits transmission data including a transmission bit string and a transmission falsification detection bit string in the open drain output mode. Further, the transmission falsification detection bit string has a bit array capable of detecting falsification of a transmission bit string when at least one "0" is not falsified to "1". In the electronic device according to the embodiment, the transmission data including a transmission bit string and a transmission falsification detection bit string is transmitted in the open drain output mode, and therefore no "0" may be falsified to "1" in the transmission bit string or the transmission falsification detection bit string. The bits included in the transmission data transmitted in the open drain output mode have no chance to be "0" which is falsified to "1", and therefore falsification may be detected, by using a transmission falsification detection bit string.

### (Technique relating to electronic device according to embodiment)

Before explaining the electronic device according to the embodiment, a technique relating to the electronic device according to the embodiment will be briefly explained.

### (I2C bus)

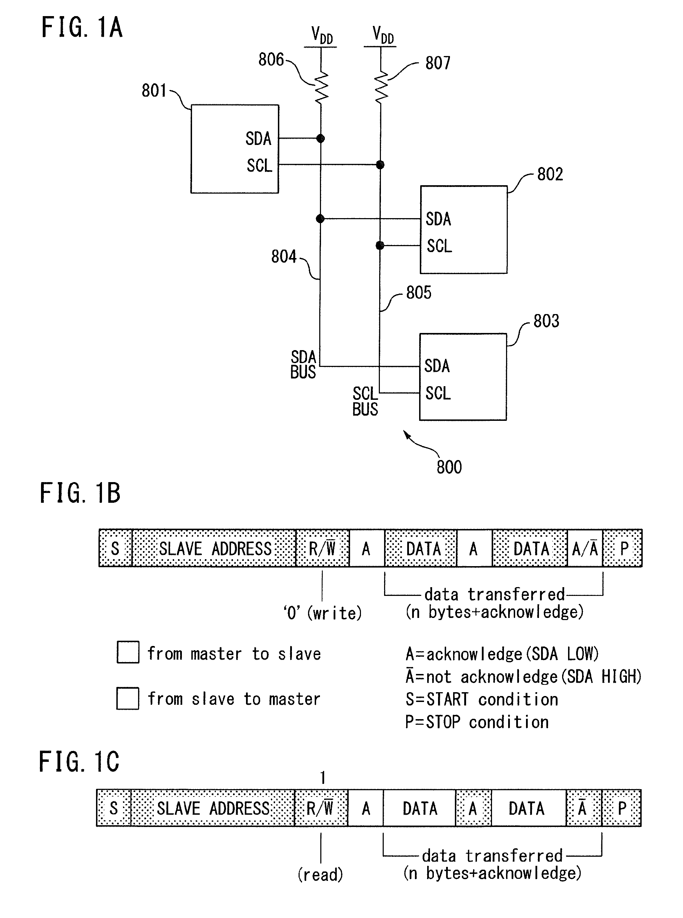

FIG. 1A is a circuit block diagram illustrating an example of a communication system including a circuit that transmits and receives data via an I2C bus. FIG. 1B is a diagram illustrating an example of a data format that is used in the communication system illustrated in FIG. 1A, and FIG. 1C is a diagram illustrating another example of a data format that is used in the communication system illustrated in FIG. 1A.

A communication system 800 has a master chip 801, a first slave chip 802, a second slave chip 803, an SDA bus 804, an SCL bus 805, an SDA pull-up resistor element 806, and an SCK pull-up resistor element 807.

The master chip 801 functions as a master and the first slave chip 802 and the second slave chip 803 each function as a slave. Each of the master chip 801, the first slave chip 802, and the second slave chip 803 has two terminals: a serial data line (SDA) terminal and a serial clock line (SCL) terminal. The SDA terminal is a terminal that transmits or receives a data signal, an acknowledge (ACK) signal, etc., between the master and the slave of the I2C bus. The SCL terminal is a terminal that transmits or receives a clock signal, which obtains a signal that the SDA terminal transmits or receives, from the master to the slave of the I2C bus.

The SDA pull-up resistor element 806 and the SCK pull-up resistor element 807 are wired-AND-connected to the SDA bus 804 and the SCL bus 805, respectively.

The SDA terminals of the master chip 801, the first slave chip 802, and the second slave chip 803 each have an open collector as an output stage and are connected to one another via the SDA bus 804. The SCL terminals of the master chip 801, the first slave chip 802, and the second slave chip 803 each have an open collector as an output stage and are connected to one another via the SCL bus 805. When "1" is output to the SDA bus 804, the output stages of the SDA terminals of the master chip 801, the first slave chip 802, and the second slave chip 803 become "Hi-Z". On the other hand, when "0" is output to the SDA bus 804, the output stages of the SDA terminals of the master chip 801, the first slave chip 802, and the second slave chip 803 become the ground level.

The communication in the communication system 800 is performed between the master chip 801, and the first slave chip 802 and the second slave chip 803, but is not performed between the first slave chip 802 and the second slave chip 803. The communication system 800 has two cases: a case where the master transmits data to the slave and a case where the master receives data from the slave. When the master transmits data to the slave, i.e., when the master chip 801 transmits data to the first slave chip 802 or the second slave chip 803, the communication is referred to as first data communication. When where the master receives data from the slave, i.e., when the maser chip 801 receives data from the first slave chip 802 or the second slave chip 803, the communication is referred to as second data communication.

In the first data communication, the master chip 801 specifies that the master chip 801 is the transmission side by specifying the address of the first slave chip 802 or the second slave chip 803 and setting an R/W bit in FIG. 1B to "0" (first step). Next, the master chip 801 receives an ACK signal from the first slave chip 802 or the second slave chip 803 (second step) and transmits data to the first slave chip 802 or the second slave chip 803 (third step). Then, the master chip 801 repeats the second step and the third step until a stop condition is established at a P bit in FIG. 1B (fourth step). When the stop condition is established (fourth step), the processing is terminated.

In the second data communication, the master chip 801 specifies that the master chip 801 is the reception side by specifying the address of the first slave chip 802 or the second slave chip 803 and setting the R/W bit in FIG. 1C to "1" (first step). Next, the master chip 801 receives the ACK signal from the first slave chip 802 or the second slave chip 803 (second step) and receives data from the first slave chip 802 or the second slave chip 803 (third step). Then, the master chip 801 repeats the second step and the third step until the stop condition is established at the P bit in FIG. 1C (fourth step). When the stop condition is established (fourth step), the processing is terminated.

### (Challenge and response authentication)

A challenge and response authentication protocol is a communication protocol that is used in order to check correctness of a device in an authentication IC chip, etc. In other words, the challenge and response authentication is a password using digital information, such as a bit string. An authentication IC chip (hereinafter, also referred to a "master device") on the side that performs authentication mounted on an automobile or an aircraft transmits an authentication request bit string, also referred to as a "challenge", to an IC chip to be authenticated (hereinafter, also referred to as a "slave device") on the side to be authenticated mounted on a battery, etc. The slave device performs encryption processing on the received "challenge", generates an authentication response bit string, also referred to as a "response", and transmits the generated "response" to the master device. The master device compares the transmitted "challenge" and a bit string decoded from the received "response" and determines that the slave device is an authorized device when determining that the comparison results indicate that the slave device is authorized.

In the challenge and response authentication, if a predetermined bit string is used as a "challenge", both the "challenge" and the "response" are fixed values, and therefore an attacker who observes the signal of the authentication IC chip may know the "challenge" and the "response". When a predetermined bit string is used as a "challenge", the "challenge" and the "response" are easily known to an attacker, and therefore a replay attack to retransmit the known "response" may be performed, and the authentication IC chip may be forged.

The "challenge" and the "response" become unlikely to be known by an attacker, by using a random number generated by a random number generator as a "challenge". If a random number is used as a "challenge", the "response" will change in accordance with the "challenge", and therefore provisions may be taken to prevent a replay attack, etc. Further, the slave device having received the "challenge" can generate a "response" by using various encryption functions, but by using a common key encryption scheme, and as a result the circuit scale of the slave device can be reduced.

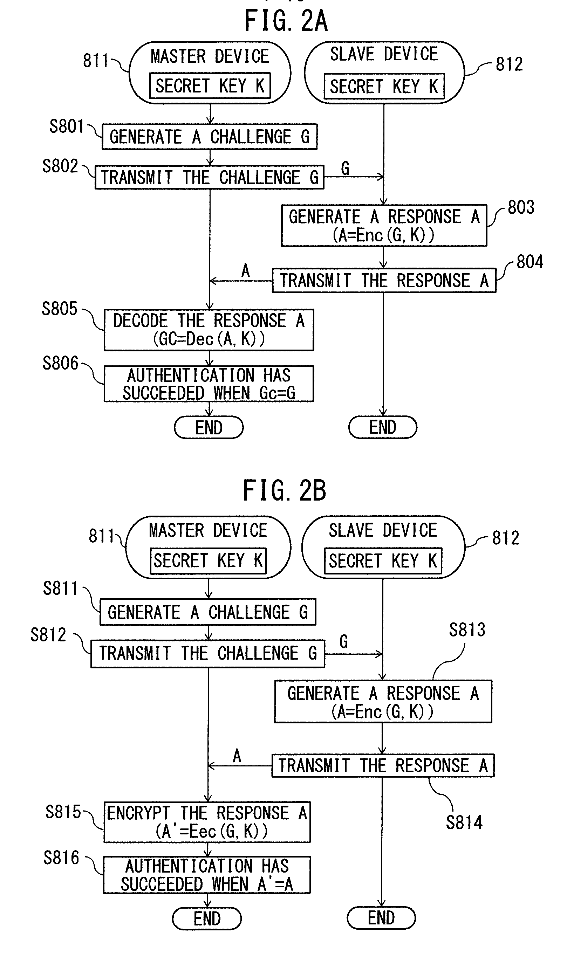

FIG. 2A is a diagram illustrating a sequence of an example of the challenge and response authentication using the common key encryption scheme and FIG. 2B is a diagram illustrating a sequence of another example of the challenge and response authentication using the common key encryption scheme. A master device 811 and a slave device 812, and a master device 821 and a slave device 822 each have a secret key K written in a ROM, not illustrated.

In the example illustrated in FIG. 2A, first, the master device 811 generates a challenge G by using a random number generator, etc., not illustrated, (S801) and transmits the generated challenge G to the slave device 812 (S802). The slave device 812 having received the challenge G generates a response A by performing encryption (A = Enc (G, K)) by using the secret key K stored in the ROM, not illustrated, (S803) and transmits the generated response A to the master device 811 (S804). The master device 811 receives the response A, and generates decoded results Gc by performing decoding (Gc = Dec (A, K)) by using the secret key K stored in the ROM (S805). The master device 811 determines that authentication has succeeded when the decoded results Gc coincide with the challenge G transmitted to the slave device 812 (S806).

In the example shown in FIG. 2B, first, the master device 821 generates the challenge G by using the random number generator, etc., not illustrated (S811), and transmits the generated challenge G to the slave device 822 (S812). The slave device 822 having received the challenge G generates the response A by performing encryption (A = Enc (G, K)) by using the secret key K stored in the ROM, not illustrated, (S813) and transmits the generated response A to the master device 821 (S814). The master device 821 having received the response A generates encryption results A' by performing encryption (A' = Enc (G, K)) by using the secret key K stored in the ROM (S815). The master device 821 determines that authentication has succeeded when the generated encryption results A' coincide with the response A transmitted from the slave device 822 (S816).

In the challenge and response authentication using the common key encryption scheme, the slave device capable of generating the correct response A corresponding to the challenge G is limited to the slave device having the secret key K, and the master device may check the correctness of the slave device.

### (Problem occurred when the challenge and response authentication is performed by using the I2C bus)

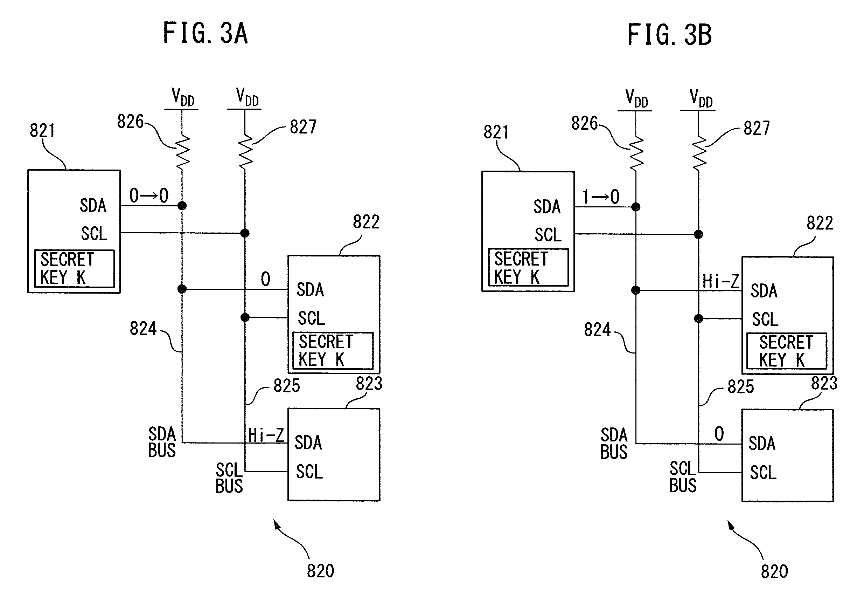

FIGs. 3A and 3B are diagrams explaining a problem occurred when the challenge and response authentication is performed by using the I2C bus, FIG. 3A illustrating the case where no problem occurs and FIG. 3B illustrating the case where a problem occurs. In FIGs. 3A and 3B, explanation is given by taking a state where a slave chip to which a challenge has been transmitted from a master chip transmits a response to the master chip as an example.

An authentication system 820 has the master device 821 that functions as a master, the slave device 822 that functions as a slave, and a malicious chip 823 having a malicious intention to falsify data that is input to the SDA terminal of the master device 821. Each of the master device 821 and the slave device 822 has the secret key K written in the ROM, not illustrated. In an example, the master device 821 is mounted on a control device of an automobile or an aircraft and the slave device 822 is mounted on a battery that supplies power to the automobile or the aircraft.

In the state illustrated in FIG. 3A, to the SDA terminal of the master device 821, "0" is transmitted as a response from the SDA terminal of the slave device 822 having received a challenge. The slave device 822 turns the output stage of the SDA terminal to the ground level in order to output "0". On the other hand, the malicious chip 823 turns the output stage of the SDA terminal to "Hi-Z" in order to transmit "1" to the master device 821 to falsify data. However, the output stage of the SDA terminal of the slave device 822 is at the ground level, and therefore even if the output stage of the SDA terminal of the malicious chip 823 is turned to "Hi-Z", the SDA terminal of the master device 821 keeps the state where "0" is input.

In the state illustrated in FIG. 3B, to the SDA terminal of the master device 821, "1" is transmitted as a response from the SDA terminal of the slave device 822 having received a challenge. The slave device 822 turns the output stage of the SDA terminal to "Hi-Z" in order to output "1". On the other hand, the malicious chip 823 turns the output stage of the SDA terminal to the ground level in order to transmit "0" to the master device 821 to falsify data. In the state illustrated in FIG. 3B, despite that "1" is transmitted as a response from the SDA terminal of the slave device 822, the output stage of the SDA terminal of the malicious chip 823 turns to the ground level, and therefore the SDA terminal of the master device 821 is falsified into a state where "0" is input.

When "0" is transmitted as a response to the master device 821 from the slave device 822, even if "1" is transmitted from the malicious chip 823, there is no chance that the response is falsified. On the other hand, when "1" is transmitted as a response to the master device 821 from the slave device 822, if "0" is transmitted from the malicious chip 823, the response is falsified.

In the authentication system 820, when "1" is transmitted as a response to the master device 821, the response is falsified, and therefore the master device 821 determines that authentication has failed despite that the slave device 822 is an authorized IC chip. Since the master device 821 determines that authentication has failed, in the device where the slave device 822 is mounted, such as the battery, the slave device 822 does not operate normally, and therefore the malicious chip 823 may make a DoS attack (Denial of Service attack) on the authentication system 820.

Similarly, the malicious chip 823 may make an attack other than the DoS attack on the authentication system 820 by falsifying "1" included in a bit string that the master device 821 and the slave device 822 transmit to "0". With the specifications of the I2C bus specified by Non-Patent Document 1, etc., the security measures are not sufficient, and therefore a bit string communicated via the SDA bus 824 and the SCL bus can be falsified and problems of security be occurred.

### (Technique to prevent falsification of bit string)

In order to prevent falsification of data included in a bit string, a transmission error detection bit string (hereinafter, also referred to as a digest) used to detect an error of a transmission bit string resulting from falsification, etc., is attached to a bit string to be transmitted. In a checksum, CRC, etc., a digest is generated by using an error detection technique. In SHA-256, a digest is generated by using an cryptographic hash function.

### (Checksum)

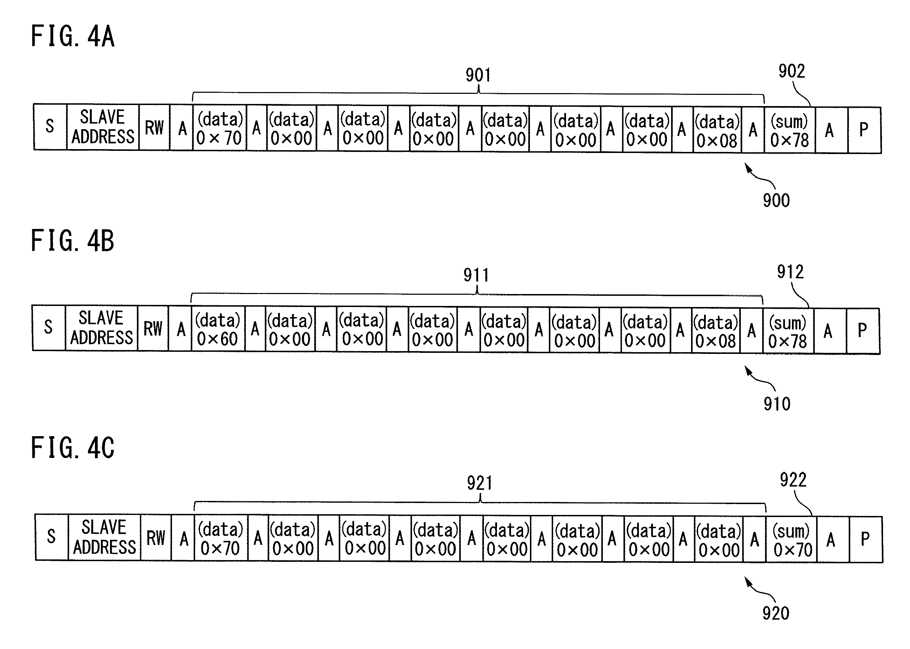

FIG. 4A is a diagram illustrating an example of transmission data including a transmission bit string and a checksum, and FIG. 4B is a diagram illustrating an example of transmission data including a transmission bit string and a checksum including errors. FIG. 4C is a diagram illustrating an example of transmission data including a falsified transmission bit string and a falsified checksum.

In a checksum, a lower one byte of the total sum (checksum) of 1-byte data of a bit string to be transmitted is generated as a digest. In transmission data 900, a 64-bit (8-byte) transmission bit string 901 represented as {70, 00, 00, 00, 00, 00, 00, 08} in the hexadecimal notation demarcated for each byte is transmitted. In the following, figures indicated by "{ }" are represented in the hexadecimal notation. In the transmission data 900, the sum total of the bit string for each byte included in the transmission bit string 901 is {78}, and therefore a digest 902 includes a bit string of {78}.

Compared with the transmission data 900, in transmission data 910, the most significant byte of a transmission bit string 911 changes from {70} to {60} due to an error. On the other hand, a digest 912 of the transmission data 910 is {78}, which is equal to the digest 902 of the transmission data 900. While the lower one byte of the total sum of the transmission bit string 911 is {68} in the transmission data 910, the digest 912 is {78}, and therefore an error of the transmission data 910 may be detected.

Compared with the transmission data 900, in transmission data 920, the least significant byte {08} of a transmission bit string 921 changes to {00} by falsification. Further, compared with the transmission data 900, in the transmission data 920, a digest 922 changes from {78} to {70} by falsification. In the transmission data 920, both the lower one bye of the total sum of the transmission bit string 921 and the digest 922 are {70}, and therefore the error of the transmission data 920 is not detected despite that the transmission bit string 921 is falsified.

The checksum can detect an error when only a bit included in a transmission bit string changes due to an error, but no errors may be detected when both the transmission bit string and the digest are falsified intentionally. It is comparatively easy to falsify a bit of "1" included in a bit string to "0" in the I2C bus, and therefore the falsification of a bit string is not detected by the checksum when an attacker falsifies the bit string communicated via the I2C bus.

### (CRC)

CRC is also referred to as a cyclic redundancy check and a remainder when a transmission bit string is divided by a predetermined divisor is taken to be a digest. The bit length of a digest of CRC depends on a devisor used for division. For example, in CRC-16 (CRC-CCITT), the divisor is (1+X⁵+X¹²+X¹⁶), and therefore the bit length of a digest is 16-bit (2-byte). With CRC, like the checksum, falsification may be performed so that the remainder when a transmission bit string is divided by a predetermined divisor coincides with the digest by falsifying a bit of "1" included in the transmission bit string to "0".

With the checksum and CRC, the calculation cost for generating a digest is comparatively low and the bit length of the digest comparatively is short, and tolerance to falsification is comparatively low.

### (Cryptographic hash function)

It becomes more difficult to perform falsification while maintaining consistency between a transmission bit string and a digest, by generating a digest by using an cryptographic hash function (hereinafter, simply referred to as a hash function), such as the SHA-2 algorithm, for example, by generating a digest by inputting bits of a transmission bit string to SHA-256. In other words, by using a digest generated by using a hash function, tolerance to falsification may be improved.

However, the hash function has such a problem that the calculation cost for generating a digest is higher and the bit size of the digest becomes larger compared to the checksum and CRC. For example, if a digest is generated by using SHA-256, which is encryption function processing, the hash function is operated a plurality of times, and therefore the calculation amount increases and at the same time, the bit size of the digest becomes 256 bits, which is comparatively large.

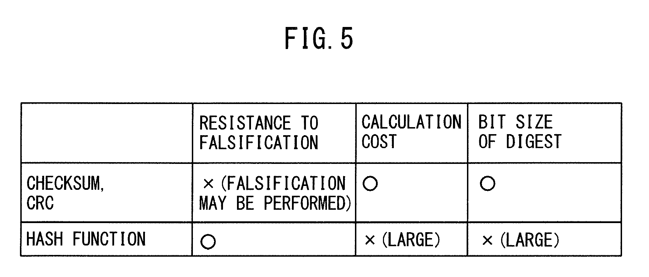

FIG. 5 is a diagram illustrating a comparison between the checksum and CRC error detection technique and the technique that uses a hash function, such as SHA.

When a digest is generated by using a checksum and CRC, an attacker may perform falsification while maintaining consistency between a transmission bit string and a digest, and therefore tolerance to falsification is low. On the other hand, when a digest is generated by using a hash function, it is not easy to perform falsification while maintaining consistency between a transmission bit string and a digest, however the calculation cost is raised and the bit size of the digest increases.

An electronic device according to the embodiment has an object to simultaneously achieve high tolerance to falsification and a reduction in the calculation cost in a serial communication bus, such as the I2C bus.

### (Configuration and function of data verification system according to first embodiment)

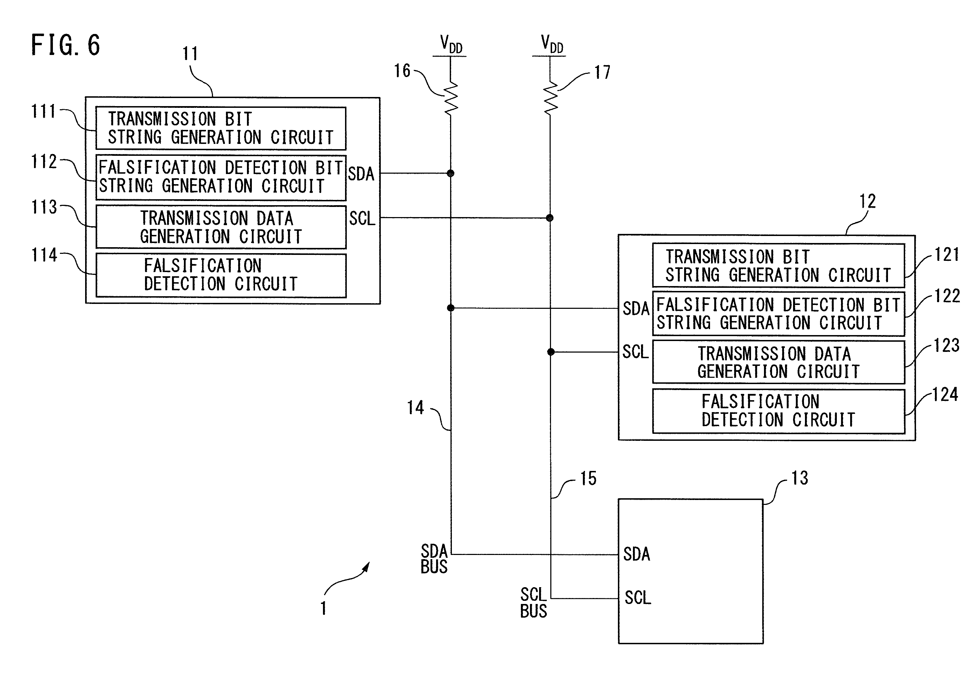

FIG. 6 is a block diagram of a data verification system according to a first embodiment.

A data verification system 1 has a master chip 11, a first slave chip 12, a second slave chip 13, an SDA bus 14, an SCL bus 15, an SDA pull-up resistor element 16, and an SCK pull-up resistor element 17. The SDA bus 14, the SCL bus 15, the SDA pull-up resistor element 16, and the SCK pull-up resistor element 17 have the same configurations and functions as those of the SDA bus 804, the SCL bus 805, the SDA pull-up resistor element 806, and the SCK pull-up resistor element 807. Detailed explanation of the SDA bus 14, the SCL bus 15, the SDA pull-up resistor element 16, and the SCK pull-up resistor element 17 is omitted here.

The master chip 11 functions as a master and the first slave chip 12 and the second slave chip 13 each function as a slave. Each of the master chip 11, the first slave chip 12, and the second slave chip 13 has two terminals: an SDA terminal and an SCL terminal. The SDA terminal is a terminal that transmits or receives a data signal, an ACK signal, etc., between the master and the slave of the I2C bus. The SCL terminal is a terminal that transmits or receives a clock signal, which obtains a signal that the SDA terminal transmits or receives, from the master to the slave of the I2C bus. Each of the SDA terminals of the master chip 11, the first slave chip 12, and the second slave chip 13 has an open collector as an output stage and is connected to one another via the SDA bus 14. Each of the SCL terminals of the master chip 11, the first slave chip 12, and the second slave chip 13 has an open collector as an output stage and is connected to one another via the SCL bus 15. Each of the master chip 11 and the first slave chip 12 may function as a CPU, a microcomputer, a RAM, or a ROM, but this is not limited.

The master chip 11 has a transmission bit string generation circuit 111, a falsification detection bit string generation circuit 112, a transmission data generation circuit 113, and a falsification detection circuit 114. The transmission bit string generation circuit 111 generates a transmission bit string corresponding to information that is transmitted to the first slave chip 12. The falsification detection bit string generation circuit 112 generates an inverted-bit string as a transmission falsification detection bit string, which is obtained by inverting all of the bits of the transmission bit string generated by the transmission bit string generation circuit 111. The transmission data generation circuit 113 generates transmission data by adding the transmission falsification detection bit string as a digest, which is generated by the falsification detection bit string generation circuit 112, to the transmission bit string generated by the transmission bit string generation circuit 111. The transmission data generation circuit 113 transmits the generated transmission data to the first slave chip 12. The falsification detection circuit 114 detects falsification of a reception bit string based on the reception bit string and a reception falsification detection bit string used to detect falsification of the reception bit string.

The first slave chip 12 has a transmission bit string generation circuit 121, a falsification detection bit string generation circuit 122, a transmission data generation circuit 123, and a falsification detection circuit 124. The transmission bit string generation circuit 121, the falsification detection bit string generation circuit 122, the transmission data generation circuit 123, and the falsification detection circuit 124 have the same functions as those of the transmission bit string generation circuit 111, the falsification detection bit string generation circuit 112, the transmission data generation circuit 113, and the falsification detection circuit 114.

The first slave chip 12 is a malicious chip having a malicious intention to falsify transmission data that is transmitted from the master chip 11 to the first slave chip 12.

### (Data verification processing of data verification system according to first embodiment)

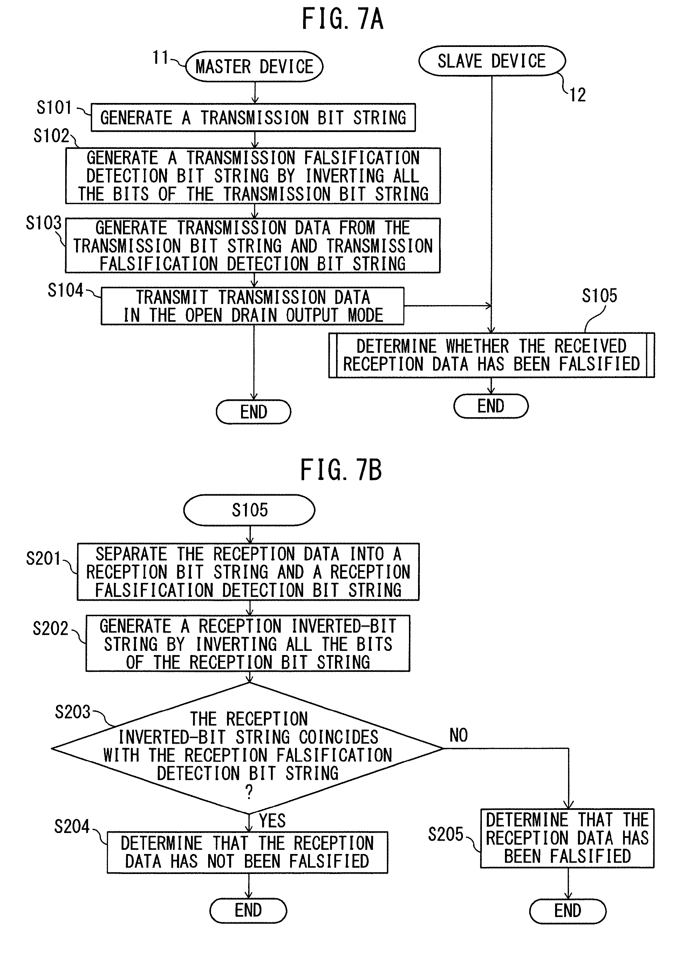

FIG. 7A is a diagram illustrating a sequence of data verification processing in the data verification system 1 and FIG. 7B is a diagram illustrating a flowchart of detailed processing at S105 illustrated in FIG. 7A.

First, the transmission bit string generation circuit 111 generates a transmission bit string corresponding to information that is transmitted to the first slave chip 12 (S101). Next, the falsification detection bit string generation circuit 112 generates a transmission inverted-bit string as a transmission falsification detection bit string, which is obtained by inverting all of the bits of the transmission bit string generated by the transmission bit string generation circuit 111 (S102). Next, the transmission data generation circuit 113 generates transmission data by adding the transmission falsification detection bit string as a digest, which is generated by the falsification detection bit string generation circuit 112, to the transmission bit string generated by the transmission bit string generation circuit 111 (S103).

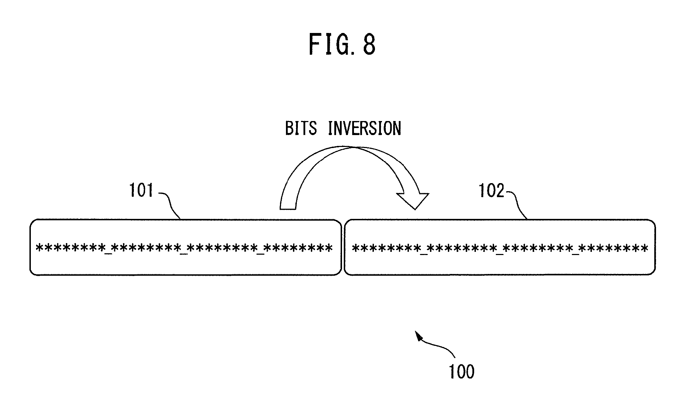

FIG. 8 is a diagram illustrating transmission data generated by the transmission data generation circuit 113. In FIG. 8, "*" represents one bit of "0" or "1".

Transmission data 100 has a transmission bit string 101 and a digest 102. The digest 102 includes a bit string obtained by inverting all of the bits of the transmission bit string. For example, when the transmission bit string 101 includes "00000000", the digest 102 includes "11111111". When the transmission bit string 101 includes "01100001", the digest 102 includes "10011110". The bit length of the digest 102 is equal to the bit length of the transmission bit string 101.

Next, the transmission data generation circuit 113 transmits transmission data to the first slave chip 12 from the SDA terminal in the open drain output mode (S104). The first slave chip 12 receives the transmission data as reception data, which is transmitted from the master chip 11 in the open drain output mode, and determines whether the received reception data has been falsified (S105).

At S105, first, the falsification detection circuit 124 separates the reception data transmitted in the open drain output mode into a reception bit string and a reception falsification detection bit string (S201). The reception bit string corresponds to the transmission bit string transmitted by the master chip 11 and the reception falsification detection bit string corresponds to the transmission falsification detection bit string transmitted by the master chip 11. Next, the falsification detection circuit 124 generates a reception inverted-bit string obtained by inverting all of the bits of the reception bit string (S202). Next, the falsification detection circuit 124 determines whether the reception inverted-bit string coincides with the reception falsification detection bit string (S203). When the falsification detection circuit 124 determines that the reception inverted-bit string coincides with the reception falsification detection bit string, the falsification detection circuit 124 determines that the reception data has not been falsified (S204). On the other hand, when the falsification detection circuit 124 determines that the reception inverted-bit string does not coincide with the reception falsification detection bit string, the falsification detection circuit 124 determines that the reception data has been falsified (S205).

### (Operation and effect of data verification system according to first embodiment)

The master chip 11 transmits transmission data to the first slave chip 12, which is generated by adding a transmission inverted-bit string obtained by inverting all of the bits of a transmission bit string to a transmission bit string as a transmission falsification detection bit string used to detect falsification of the transmission bit string. The transmission falsification detection bit string is a transmission inverted-bit string obtained by inverting all of the bits of the transmission bit string, and therefore the bit of the transmission falsification detection bit string corresponding to the bit of "1" of the transmission bit string is "0". Further, the bit of the transmission falsification detection bit string corresponding to the bit of "0" of the transmission bit string is "1". When the second slave chip 13 falsifies the bit of "1" of the transmission bit string to "0", the falsification detection circuit 124 is unlikely to make erroneous determination unless the second slave chip 13 falsifies the corresponding bit of the transmission falsification detection bit string from "0" to "1". However, the master chip 11 transmits the transmission data from the SDA terminal in the open drain output mode, and therefore "0" included in the transmission falsification detection bit string is unlikely to be falsified to "1". Similarly, when the second slave chip 13 falsifies "1" included in the transmission inverted-bit string to "0", "0" included in the transmission bit string is unlikely to be falsified to "1". The data verification system 1 may detect falsification from an error of a correspondence relationship between the transmission bit string and the transmission falsification detection bit string if a certain bit is falsified, since the transmission data includes the transmission inverted-bit string obtained by inverting all of the bits of the transmission bit string in the transmission falsification detection bit string.

Further, the transmission falsification detection bit string included in the digest is generated by inverting all of the bits included in the transmission bit string, and therefore the cost of calculation for generating a transmission falsification detection bit string is low.

### (Configuration and function of data verification system according to second embodiment)

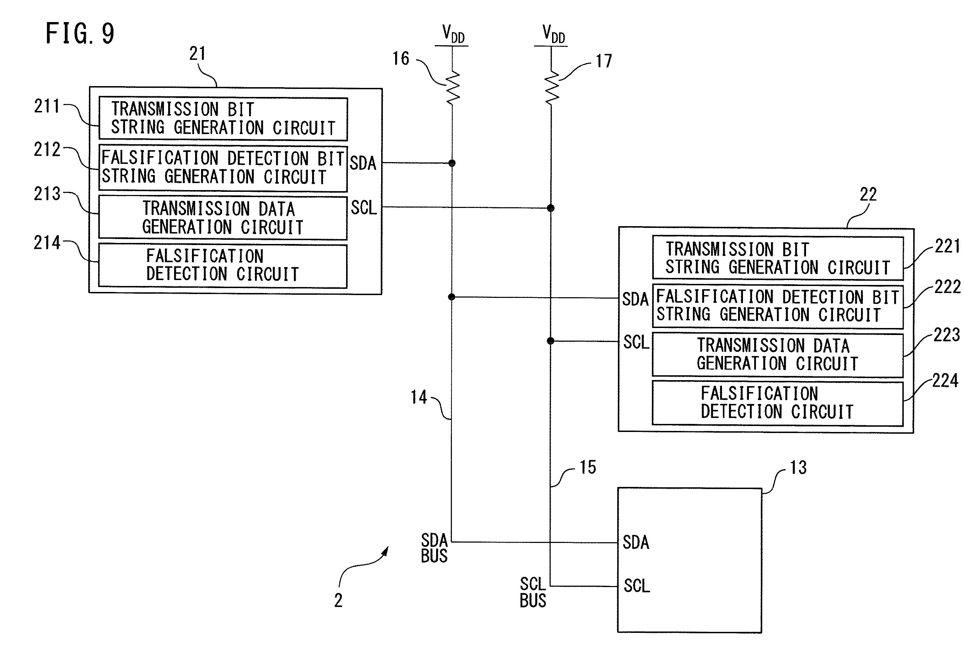

FIG. 9 is a block diagram of a data verification system according to a second embodiment.

A data verification system 2 differs from the data verification system 1 in that a master chip 21 and a first slave chip 22 are arranged in place of the master chip 11 and the first slave chip 12. The components of the data verification system 2 other than the master chip 21 and the first slave chip 22 have the same configurations and functions as those of the components of the data verification system 1 to which the same symbols are attached, and therefore detailed explanation is omitted here.

The master chip 11 has a transmission bit string generation circuit 211, a falsification detection bit string generation circuit 212, a transmission data generation circuit 213, and a falsification detection circuit 214. The transmission bit string generation circuit 211 generates a transmission bit string corresponding to information that is transmitted to the first slave chip 22. The falsification detection bit string generation circuit 212 generates a number-of-zeros bit string as a transmission falsification detection bit string, which corresponds to the number of "0s" included in the transmission bit string generated by the transmission bit string generation circuit 211. The transmission data generation circuit 213 generates transmission data by adding the transmission falsification detection bit string as a digest, which is generated by the falsification detection bit string generation circuit 212, to the transmission bit string generated by the transmission bit string generation circuit 211. The transmission data generation circuit 113 transmits the generated transmission data to the first slave chip 22. The falsification detection circuit 214 detects falsification of a reception bit string based on the reception bit string and a reception falsification detection bit string used to detect falsification of the reception bit string.

The first slave chip 22 has a transmission bit string generation circuit 221, a falsification detection bit string generation circuit 222, a transmission data generation circuit 223, and a falsification detection circuit 224. The transmission bit string generation circuit 221, the falsification detection bit string generation circuit 222, the transmission data generation circuit 223, and the falsification detection circuit 224 have the same functions as those of the transmission bit string generation circuit 211, the falsification detection bit string generation circuit 212, the transmission data generation circuit 213, and the falsification detection circuit 214.

### (Data verification processing of data verification system according to second embodiment)

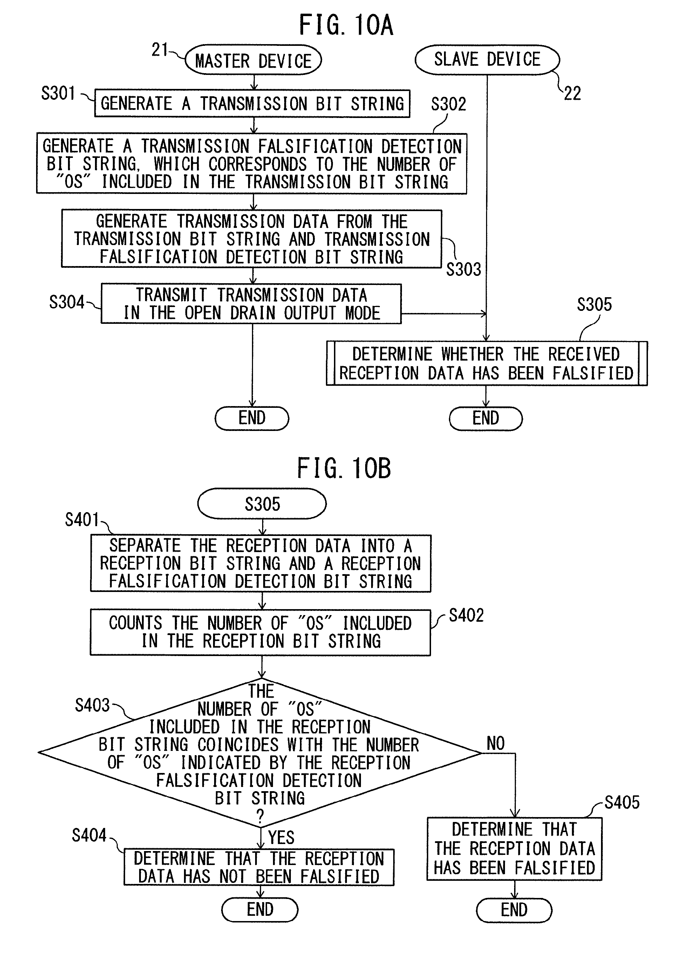

FIG. 10A is a diagram illustrating a sequence of data verification processing in the data verification system 2 and FIG. 10B is a diagram illustrating a flowchart of detailed processing at S305 illustrated in FIG. 10A.

First, the transmission bit string generation circuit 211 generates a transmission bit string corresponding to information that is transmitted to the first slave chip 22 (S301). Next, the falsification detection bit string generation circuit 212 generates a number-of-zeros bit string as a transmission falsification detection bit string, which corresponds to the number of "0s" included in the transmission bit string generated by the transmission bit string generation circuit 211 (S302). Next, the transmission data generation circuit 213 generates transmission data by adding the transmission falsification detection bit string as a digest, which is generated by the falsification detection bit string generation circuit 212, to the transmission bit string generated by the transmission bit string generation circuit 211 (S303).

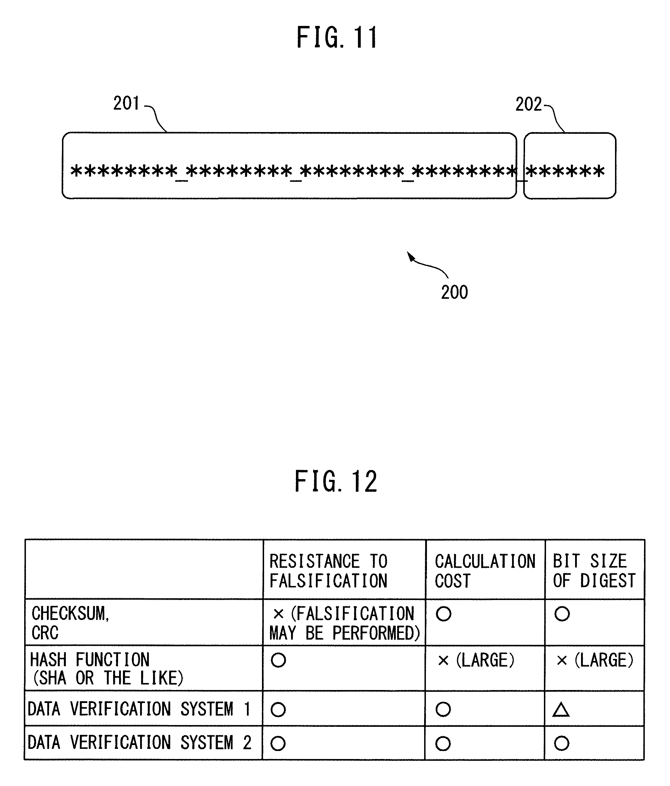

FIG. 11 is a diagram illustrating transmission data generated by the transmission data generation circuit 213. In FIG. 11, "*" represents one bit of "0" or "1".

Transmission data 200 has a transmission bit string 201 and a digest 202. The digest 202 includes a bit string corresponding to the number of "0s" included in the transmission bit string 201. For example, when the transmission bit string 201 is "00000000" including eight "0s", the digest 202 includes "1000". Further, when the transmission bit string 201 is "01100001" including five "0s", the digest 202 includes "0101".

The number of bits of the bit string included in the digest 202 is represented by "floor (log 2N) + 1" where the number of bits of the transmission bit string 201 is taken to be N. Here, floor (X) is a floor function, meaning the maximum integer not exceeding X.

Next, the transmission data generation circuit 213 transmits transmission data to the first slave chip 12 from the SDA terminal in the open drain output mode (S304). The first slave chip 22 receives the transmission data as reception data, which is transmitted from the master chip 21 in the open drain output mode, and determines whether the received reception data has been falsified (S305).

At S305, first, the falsification detection circuit 224 separates the reception data transmitted in the open drain output mode into a reception bit string and a reception falsification detection bit string (S401). The reception bit string corresponds to the transmission bit string transmitted by the master chip 21 and the reception falsification detection bit string corresponds to the transmission falsification detection bit string transmitted by the master chip 21. Next, the falsification detection circuit 224 counts the number of "0s" included in the reception bit string (S402), and determines whether the number of "0s" included in the reception bit string coincides with the number of "0s" indicated by the reception falsification detection bit string (S403). When the falsification detection circuit 224 determines that the number of "0s" included in the reception bit string coincides with the number of "0s" indicated by the reception falsification detection bit string, the falsification detection circuit 224 determines that the reception data has not been falsified (S404). On the other hand, when the falsification detection circuit 224 determines that the number of "0s" included in the reception bit string does not coincide with the number of "0s" indicated by the reception falsification detection bit string, the falsification detection circuit 224 determines that the reception data has been falsified (S405).

### (Operation and effect of data verification system according to second embodiment)

The master chip 21 transmits transmission data to the first slave chip 22, which is generated by adding the number-of-zeros bit string corresponding to the number of "0s" included in the transmission bit string to the transmission bit string as the transmission falsification detection bit string used to detect falsification of the transmission bit string. When the second slave chip 13 falsifies M "1s" included in the transmission bit string to "0s", the number of "0s" included in the transmission bit string increases by M. Since the number of "0s" included in the transmission bit string increases by M, the falsification detection circuit 224 determines that data has been falsified unless the second slave chip 13 changes the transmission falsification detection bit string to that in which the values are incremented M times. Unless at least one of "0s" included in the transmission falsification detection bit string is falsified to "1", the transmission falsification detection bit string is not changed to that in which the values are incremented M times. However, the master chip 21 transmits the transmission data from the SDA terminal in the open drain output mode, and therefore "0" included in the transmission falsification detection bit string is unlikely to be falsified to "1". The data verification system 2 may detect falsification from an error of a correspondence relationship between the transmission bit string and the transmission falsification detection bit string if a certain bit is falsified, since the transmission data includes the number-of-zeros bit string corresponding to the number of "0s" included in the transmission bit string in the transmission falsification detection bit string.

Further, the transmission falsification detection bit string included in the digest is generated by counting the number of "0s" of the transmission bit string, and therefore, the cost of calculation for generating the transmission falsification detection bit string is low. Furthermore, the bit size of the transmission falsification detection bit string may be improved.

FIG. 12 is a diagram illustrating a comparison between techniques used when a digest is generated. When a detection technique, such as a checksum and CRC, is used, falsification may be performed, and therefore tolerance to falsification is low. When a hash function, such as SHA, is used, the calculation cost is raised and the bit size of the digest increases. The data verification system 1 according to the first embodiment has a low calculation cost and a high tolerance to falsification. The data verification system 2 according to the second embodiment is capable of reducing the bit size of the digest in addition to having a low calculation cost and a high tolerance to falsification.

### (Configuration and function of data verification system according to third embodiment)

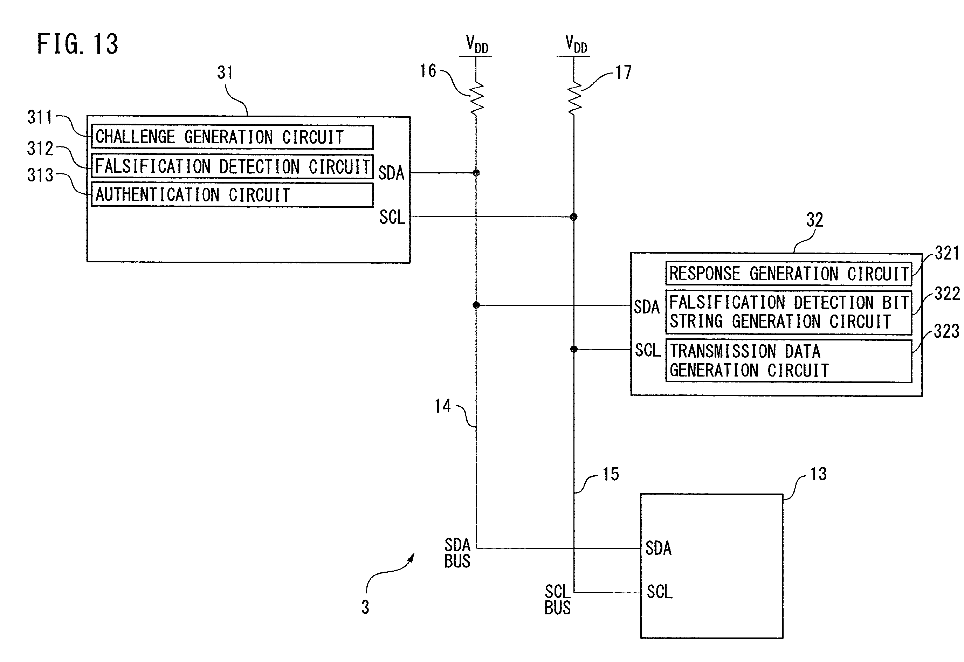

FIG. 13 is a block diagram of a data verification system according to a third embodiment.

A data verification system 3 differs from the data verification system 2 in that a master chip 31 and a first slave chip 32 are arranged in place of the master chip 21 and the first slave chip 22. The components of the data verification system 3 other than the master chip 31 and the first slave chip 32 have the same configurations and functions as those of the components of the data verification system 2 to which the same symbols are attached, and therefore detailed explanation is omitted here.

The master chip 31 has a challenge generation circuit 311, a falsification detection circuit 312, and an authentication circuit 313. The challenge generation circuit 311 has a random number generator and generates an authentication request bit string having a predetermined bit length, i.e., a challenge. The falsification detection circuit 312 detects falsification of a response based on the response received from the first slave chip 32 and a reception falsification detection bit string used to detect falsification of the response. The authentication circuit 313 has an encryption processing circuit and determines whether the first slave chip 32 is authenticated, by comparing the transmitted challenge and the challenge decoded from the received response by using a common key.

The first slave chip 32 has a response generation circuit 321, a falsification detection bit string generation circuit 322, and a transmission data generation circuit 323. The response generation circuit 321 has an encryption processing circuit and generates a response by encrypting an authentication response bit string, i.e., a challenge by using a common key. The falsification detection bit string generation circuit 322 generates a number-of-zeros bit string as a transmission falsification detection bit string, which corresponds to the number of "0s" included in the response generated by the response generation circuit 321. The transmission data generation circuit 323 generates transmission data by adding the transmission falsification detection bit string as a digest, which is generated by the falsification detection bit string generation circuit 322, to the response generated by the response generation circuit 321. The transmission data generation circuit 323 transmits the generated transmission data to the first slave chip 32.

### (Data verification processing of data verification system according to third embodiment)

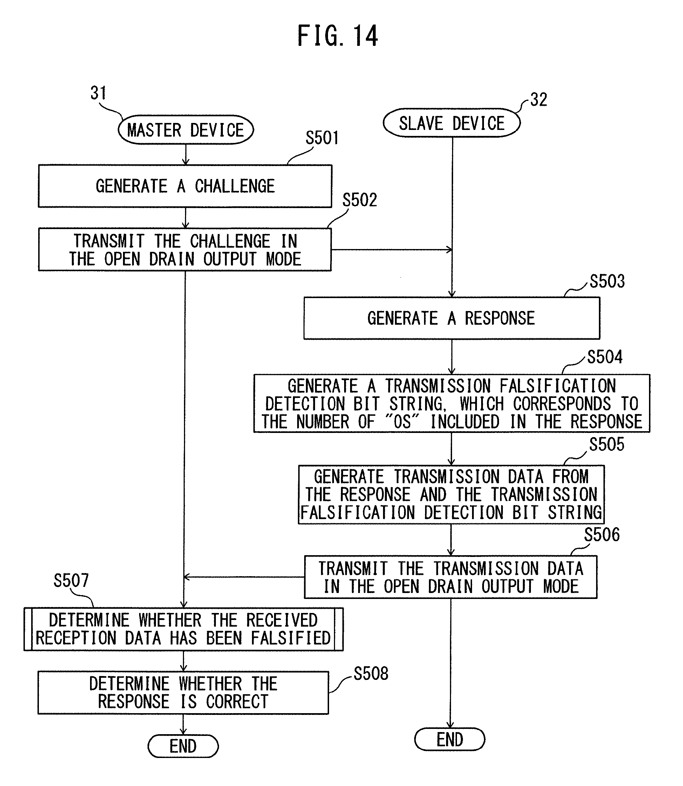

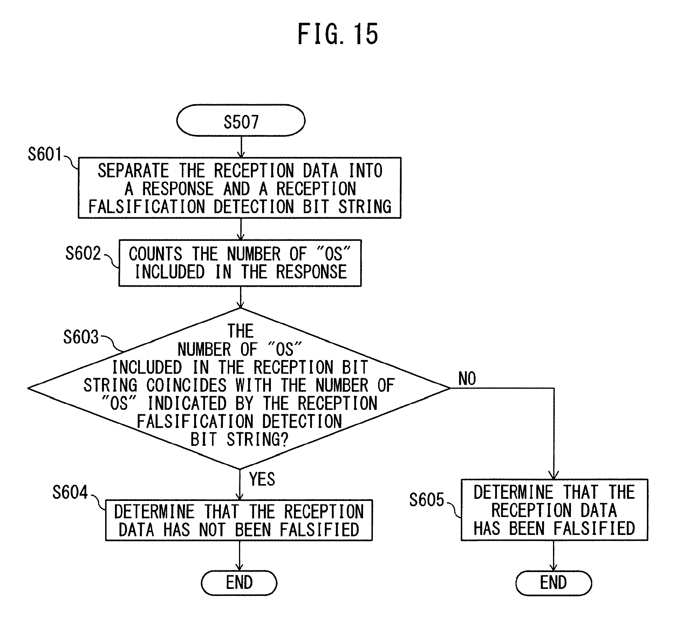

FIG. 14 is a diagram illustrating a sequence of data verification processing in the data verification system 3 and FIG. 15 is a diagram illustrating a flowchart of detailed processing at S507 illustrated in FIG. 14.

First, the challenge generation circuit 311 generates a challenge (S501) and transmits the generated challenge to the first slave chip 32 from the SDA terminal in the open drain output mode (S502). Next, the response generation circuit 321 generates a response by encrypting the challenge (S503). Next, the falsification detection bit string generation circuit 322 generates a number-of-zeros bit string as a transmission falsification detection bit string, which corresponds to the number of "0s" included in the response generated by the response generation circuit 321 (S504). Next, the transmission data generation circuit 323 generates transmission data by adding the transmission falsification detection bit string as a digest, which is generated by the falsification detection bit string generation circuit 322, to the response generated by the response generation circuit 321 (S505). Next, the transmission data generation circuit 323 transmits the transmission data to the master chip 31 from the SDA terminal in the open drain output mode (S506). Next, the master chip 31 receives the transmission data as a reception data, which is transmitted from the first slave chip 32 in the open drain output mode, and determines whether the received reception data has been falsified (S507).

At S507, first, a falsification detection circuit 324 separates the reception data transmitted in the open drain output mode into a response and a reception falsification detection bit string (S601). The reception falsification detection bit string corresponds to the transmission falsification detection bit string transmitted by the first slave chip 32. Next, the falsification detection circuit 324 counts the number of "0s" included in the response (S602). Next, the falsification detection circuit 324 determines whether the number of "0s" included in the response coincides with the number of "0s" indicated by the reception falsification detection bit string (S603). When the falsification detection circuit 324 determines that the number of "0s" included in the response coincides with the number of "0s" indicated by the reception falsification detection bit string, the falsification detection circuit 324 determines that the response has not been falsified (S604). On the other hand, when the falsification detection circuit 324 determines that the number of "0s" included in the response does no coincide with the number of "0s" indicated by the reception falsification detection bit string, the falsification detection circuit 324 determines that the response has been falsified (S605).

Then, the authentication circuit 313 determines whether the first slave chip 32 is authenticated, by comparing the transmitted challenge and the challenge decoded from the response (S508).

### (Operation and effect of data verification system according to third embodiment)

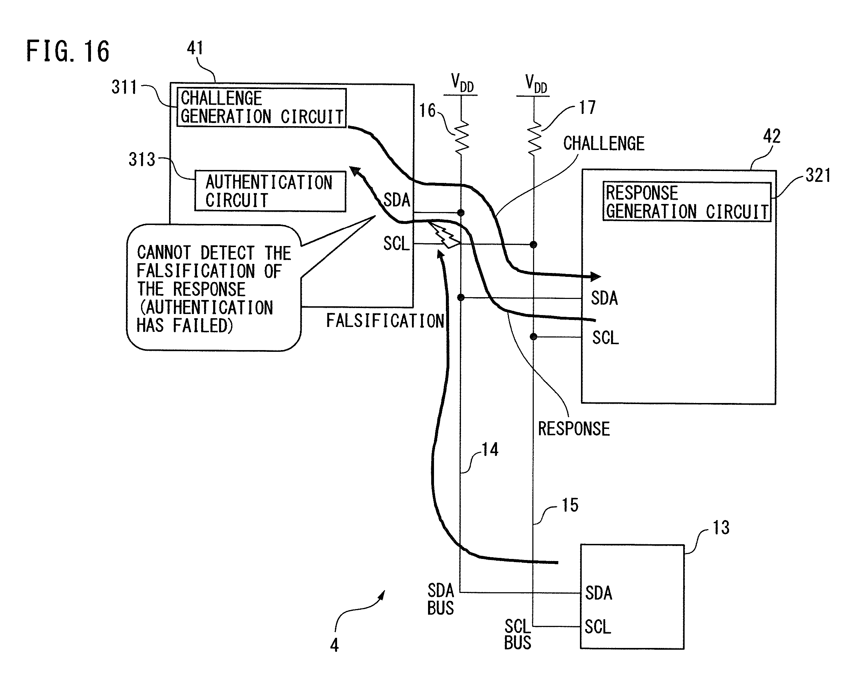

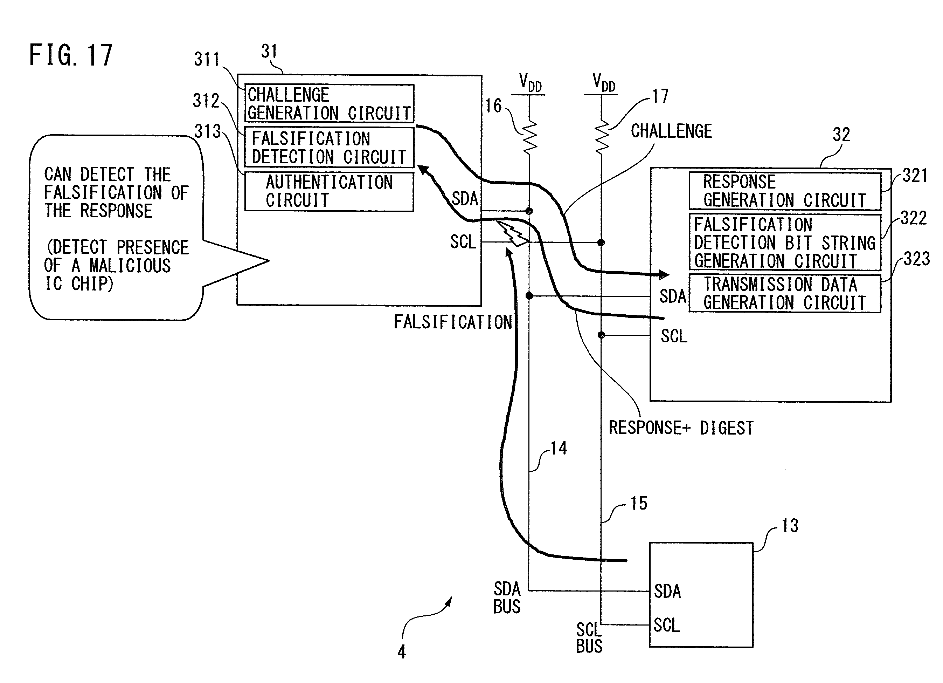

FIG. 16 is a block diagram of a data verification system not having a falsification detection function according to the third embodiment and FIG. 17 is a block diagram of the data verification system 3.

A data verification system 4 differs from the data verification system 3 in that a maser chip 41 and a first slave chip 42 are arranged in place of the master chip 31 and the first slave chip 32. The components of the data verification system 4 other than the master chip 41 and the first slave chip 42 have the same configurations and functions as those of the components of the data verification system 3 to which the same symbols are attached, and therefore detailed explanation is omitted here.

The master chip 41 differs from the master chip 31 in not having the falsification detection circuit 312 and the first slave chip 42 differs from the first slave chip 32 in not having the falsification detection bit string generation circuit 322 and the transmission data generation circuit 323. In the data verification system 4, the master chip 41 determines that authentication has failed when the second slave chip 13 falsifies a response despite that the first slave chip 32 is an authorized IC chip.

On the other hand, in the data verification system 3, the master chip 31 may detect falsification by using a falsification detection bit string included in a digest and to detect a malicious IC chip when the second slave chip 13 falsifies the response.

In the data verification system 3, the falsification detection circuit is mounted only on the master chip and the falsification detection bit string generation circuit is mounted only on the slave chip, but the falsification detection circuit and the falsification detection bit string generation circuit may be mounted on both the master chip and the slave chip.

## Claims

1. An electronic device comprising:
a falsification detection bit string generation circuit configured to generate a transmission falsification detection bit string having a bit array in which at least one "0" is changed to "1" when at least one "1" of a transmission bit string is changed to "0";
a transmission data generation circuit configured to generate transmission data including the transmission bit string and the transmission falsification detection bit string; and
a data output circuit configured to transmit the transmission data in an open drain output mode.

2. The electronic device according to claim 1, wherein
the transmission falsification detection bit string includes a transmission inverted-bit string obtained by inverting all bits included in the transmission bit string.

3. The electronic device according to claim 1, wherein
the transmission falsification detection bit string includes a number-of-zeros bit string corresponding to the number of "0s" included in the transmission bit string.

4. The electronic device according to claim 1, further comprising:
a falsification detection circuit configured to determine falsification of a reception bit string based on the reception bit string including a plurality of bits included in reception data transmitted in the open drain output mode, and a reception falsification detection bit string.

5. The electronic device according to claim 4, wherein
the falsification detection circuit determines that the reception bit string has been falsified when the reception inverted-bit string obtained by inverting all bits included in the reception bit string does not coincide with the reception falsification detection bit string.

6. The electronic device according to claim 4, wherein
the falsification detection circuit determines that the reception bit string has been falsified when the number of "0s" included in the reception bit string does not coincide with the number of "0s" indicated by the reception falsification detection bit string.

7. The electronic device according to any one of claims 4 to 6, wherein
the transmission bit string includes an authentication request bit string,
the reception bit string includes an authentication response bit string obtained by encrypting the authentication request bit string, and
the electronic device further comprises an authentication circuit configured to decode the authentication response bit string and to determine that authentication has succeeded when the authentication request bit string included in the transmission bit string coincides with the authentication request bit string decoded from the authentication response bit string.

8. A data verification method comprising:
generating a transmission falsification detection bit string having a bit array in which at least one "0" is changed to "1" when at least one "1" of a transmission bit string is changed to "0";
generating transmission data including the transmission bit string and the transmission falsification detection bit string;
transmitting the transmission data in an open drain output mode; and
detecting falsification of the transmission bit string based on the transmission bit string and the transmission falsification detection bit string.
